# EUROPEAN PATENT APPLICATION

(11) **EP 2 757 858 A1**
(43) Date of publication of application: **23.07.2014**
(21) Application number: 12831887.0
(22) Date of filing: 29.08.2012
(51) Int. Cl.: H04W 92/20, H04W 16/24, H04W 24/08

(54) **BASE-STATION DEVICE AND COMMUNICATION METHOD**

(30) Priority: 16.09.2011 JP 2011203592
(71) Applicant: Hitachi, Ltd., Tokyo 100-8280 (JP)
(72) Inventor: JIA Yunjian, Chiyoda-ku, Tokyo 100-8280 (JP); TAMAKI Tsuyoshi, Chiyoda-ku tokyo 100-8280 (JP); FUJISHIMA Kenzaburo, Chiyoda-ku, Tokyo 100-8280 (JP); ISHIDA Hitoshi, Chiyoda-ku, Tokyo 100-8280 (JP)
(74) Representative: MERH-IP Matias Erny Reichl Hoffmann
(86) International application number: PCT/JP2012/071757
(87) International publication number: WO 2013/038904

(57) **Abstract**

By a base station that is not limited to a cell concept, the system control cost is controlled and an area of high-communication-speed/high-communication-quality is expanded. There are provided fixed-cell support base-station devices 420 and 421 having functions of physical layer processing and higher layer processing according to the cell concept in the related art and an unfixed-area support base-station device 430 having a physical layer processing function that is not limited to the cell concept. The unfixed-cell support base-station device 430 performs physical layer signal processing for a terminal in a low throughput area and selects an arbitrary antenna group from antennas or antenna group linked to the fixed-cell support base stations 420 and 421, and the fixed-cell support base stations 420 and 421 transmit their own transmission signals and transmission signals directed to the terminal together.

## Description

### Technical Field

The present invention relates to a wireless communication system, a communication method, a communication device and a base-station device.

### Background Art

A cellular system divides an area to provide wireless communication services into a plurality of zones (cells) around base stations and performs transmission and reception of radio signals between each base station and a plurality of terminals existing in a cell covered by the base station. In recent years, there is a growing need for expansion of an area in which it is possible to provide high-speed/high-quality wireless services, and there is a growing demand for the improvement of performance in a low throughput area in a cellular system in the related art.

For example, there are two following techniques suggested up to the present time for such a demand. One is to provide wireless communication services in a smaller cell by adding base stations in a low throughput area in a system, changing the arrangement of cells in the related art, using more base stations as described in PTL 1. This method is generally called "cell-splitting". The other is to improve the throughput on the cell edge by establishing cooperation with a plurality of base stations that cover a plurality of cells through a control station with respect to a cell edge area with large intercell interference and solving the intercell interference as described in PTL 2. This method is called "CoMP (Coordinated Multi-Point Operation)", and standardization in LTE (Long Term Evolution)-Advanced is discussed by 3GPP (the 3rd Generation Partnership Project) as described in NPTL 1.

### Citation List

### Patent Literatures

PTL 1: JP 2011-501526 W
PTL 2: Japanese Patent Application No. 2009-85591 Non-Patent Literature

NPTL 1: 3GPP (3rd Generation Partnership Project) TR_36.814_041: Technical Specification Group Radio Access Network; Further Advancements for E-UTRA, Physical Layer Aspects

### Summary of Invention

### Technical Problem

In the two above-mentioned techniques aimed at the improvement of the performance in the low throughput area for the expansion of a high-communication-speed/high-communication-quality area, there are the following problems.

First, since an increase in the number of cells and addition of base stations according to the cell-splitting cause a change in the system configuration, a case is considered where a disadvantageous influence on the stability of network management is caused in addition to the construction cost. Further, interference in a cell edge area becomes remarkable due to the increase in the number of cells.

When the cell edge area is set as a new cell, there is a case where the control load increases in the system due to an increase of the cell and the lack of resources for control information become a problem.

Moreover, since there is a case where the coordinated multi-point operation for interference measures in the cell edge area influences all base stations associated with processing for the cell edge area and it is not possible to flexibly use the communication resources of each base station and the processing performance, there is a problem where excessive communication resources and processing performance are wasted for the interference measures in the cell edge area and the system efficiency degrades.

Taking into account the above points, it is one object of the present invention to provide a wireless communication system, communication method, and communication device that have a mechanism to establish both the stability of network management and the efficiency of interference measures in a cellular system, a mobile communication system, or a portable phone system, and so on.

Moreover, it is another object of the present invention to improve the use efficiency of resources of cells while maintaining a system load in the expansion of a high-communication-speed/high-communication-quality area.

### Solution to Problem

The above-mentioned problem can be solved by a system of fixed-cell support base-station devices, which conform to a cell concept in the related art and have functions of physical layer processing and higher layer processing, and an unfixed-area support base-station device which is not limited to the cell concept and has a physical layer processing function.

The unfixed-area support base-station device can be configured so as to have an interface that performs data transmission with the fixed-cell support base-station device. The unfixed-area support base-station device can be configured so as to take a partial role of the plurality of fixed-cell support base-station devices and perform physical layer signal processing for a low throughput area.

Here, it is possible to make a configuration such that network management of the higher layer is performed on the premise of the fixed-cell ID and control information of the fixed-cell support base-station device.

Moreover, in the unfixed-area support base-station device, it can be formed so as to have a feature that the cell ID is not assigned from the network management side of the higher layer.

According to one aspect of the present invention, a wireless base-station device is provided. The wireless base-station device has a feature that a registered cell is not added, that is, content of a neighbor list to record a cell is not changed in a higher-layer network management station in a cellular system, and an unfixed-cell support base-station device performs signal processing of a physical layer for a terminal in a low throughput area, selects an arbitrary antenna group (single antenna or multiple antennas) from antennas or antenna group linked to a fixed-cell support base station and transmits it together with a transmission signal of the fixed-cell support base station. The unfixed-cell support base-station device includes an interface which performs signal exchange with the fixed-cell support base station, a physical layer signal processing controller and a physical layer signal processing unit based on data analyzed by the fixed-cell support base station. The physical layer signal processing controller determines whether the unfixed-cell support base-station device needs to perform the physical layer signal processing, and generates control information used for the physical layer signal processing. The physical layer signal processing unit creates a transmission signal over radio RF resources (antenna group) of multiple fixed cells.

Moreover, a centralized wireless base-station device can be configured such that the fixed-cell support base-station device and the unfixed-area support base-station device are collectively arranged in one place.

According to another aspect of the present invention, there is provided a wireless communication system including: a first base station for fixed-cell support connected with one or multiple first antennas; a second base station for fixed-cell support connected with one or multiple second antennas; and a communication device for unfixed-area support which performs transmission or reception of a signal with the first base station and the second base station and creates scheduling information and antenna mapping information, in which: the first base station transmits a first reference signal to a terminal during a service; the first base station receives first channel information and/or first communication quality information between the one or multiple first antennas and the terminal, which are calculated by the terminal using the received first reference signal, from the terminal; the first base station transmits identification information of the second base station that covers another cell in which the terminal is located, to the terminal, based on the first channel information and/or the first communication quality information, in a case where reception signal intensity or a ratio of a reception signal to an interference signal is equal to or less than a threshold defined in advance; the first base station receives second channel information between the one or multiple second antennas and the terminal, which is calculated by the terminal using a second reference signal received from the second base station specified by the identification information, from the terminal; the first base station transmits a support request including identification information of the terminal, identification information of the first base station, the identification information of the second base station, the first and second channel information, and a transmission signal to the terminal, to the communication device; the communication device selects an antenna combination with highest communication quality or higher communication quality than a threshold defined in advance, from the one or multiple first antennas and the one or multiple second antennas, based on the support request, creates scheduling information and antenna mapping information of a time frequency resource, and transmits an instruction signal including the scheduling information, the antenna mapping information, and the transmission signal to the terminal, to the first base station and the second base station; and the first base station and the second base station each multiplex and map the transmission signal to the terminal and other transmission signals according to the scheduling information and the antenna mapping information, based on the instruction signal, and perform transmission from each antenna included in the selected antenna combination.

Moreover, according to another aspect of the present invention, there is provided a communication method in a wireless communication system, the wireless communication system including: a first base station for fixed-cell support connected with one or multiple antennas; a second base station for fixed-cell support connected with one or multiple second antennas; and a communication device for unfixed-area support which performs transmission or reception of a signal with the first base station and the second base station and creates scheduling information and antenna mapping information, in which: the first base station transmits a first reference signal to a terminal during a service; the first base station receives first channel information and/or first communication quality information between the one or multiple first antennas and the terminal, which are calculated by the terminal using the received first reference signal, from the terminal; the first base station transmits identification information of the second base station that covers another cell in which the terminal is located, to the terminal, based on the first channel information and/or the first communication quality information, in a case where reception signal intensity or a ratio of a reception signal to an interference signal is equal to or less than a threshold defined in advance; the first base station receives second channel information between the one or multiple second antennas and the terminal, which is calculated by the terminal using a second reference signal received from the second base station specified by the identification information, from the terminal; the first base station transmits a support request including identification information of the terminal, identification information of the first base station, the identification information of the second base station, the first and second channel information, and a transmission signal to the terminal, to the communication device; the communication device selects an antenna combination with highest communication quality or higher communication quality than a threshold defined in advance, from the one or multiple first antennas and the one or multiple second antennas, based on the support request, creates scheduling information and antenna mapping information of a time frequency resource, and transmits an instruction signal including the scheduling information, the antenna mapping information, and the transmission signal to the terminal, to the first base station and the second base station; and the first base station and the second base station each multiplex and map the transmission signal to the terminal and other transmission signals according to the scheduling information and the antenna mapping information, based on the instruction signal, and perform transmission from each antenna included in the selected antenna combination.

Further, according to another aspect of the present invention, there is provided a communication device in a wireless communication system including: a first base station for fixed-cell support connected with one or multiple antennas; a second base station for fixed-cell support connected with one or multiple second antennas; and a communication device for unfixed-area support which performs transmission or reception of a signal with the first base station and the second base station and creates scheduling information and antenna mapping information, in which: the first base station transmits a first reference signal to a terminal during a service; the first base station receives first channel information and/or first communication quality information between the one or multiple first antennas and the terminal, which are calculated by the terminal using the received first reference signal, from the terminal; the first base station transmits identification information of the second base station that covers another cell in which the terminal is located, to the terminal, based on the first channel information and/or the first communication quality information, in a case where reception signal intensity or a ratio of a reception signal to an interference signal is equal to or less than a threshold defined in advance; the first base station receives second channel information between the one or multiple second antennas and the terminal, which is calculated by the terminal using a second reference signal received from the second base station specified by the identification information, from the terminal; the first base station transmits a support request including identification information of the terminal, identification information of the first base station, the identification information of the second base station, the first and second channel information and a transmission signal to the terminal, to the communication device; and when the communication device receives a support request from the first base station, the communication device selects an antenna combination with highest communication quality or higher communication quality than a threshold defined in advance, from the one or multiple first antennas and the one or multiple second antennas, based on the support request, creates scheduling information and antenna mapping information of a time frequency resource, transmits an instruction signal including the scheduling information, the antenna mapping information, and the transmission signal to the terminal, to the first base station and the second base station, and causes the first base station and the second base station to multiplex and map the transmission signal to the terminal and other transmission signals according to the scheduling information and the antenna mapping information, based on the instruction signal, and perform transmission from each antenna included in the selected antenna combination.

Moreover, according to another aspect of the present invention, there is provided a base-station device in a wireless communication system, the base-station device including: a first base station unit for fixed-cell support connected with one or multiple antennas; a second base station unit for fixed-cell support connected with one or multiple second antennas; a communication unit for unfixed-area support which performs transmission or reception of a signal with the first base station unit and the second base station unit and creates scheduling information and antenna mapping information; and a signal synthesis unit which synthesizes transmission signals from the first base station unit, the second base station unit and the communication unit, in which the first base station unit transmits a first reference signal to a terminal during a service; the first base station unit receives first channel information and/or first communication quality information between the one or multiple first antennas and the terminal, which are calculated by the terminal using the received first reference signal, from the terminal; the first base station unit transmits identification information of the second base station unit that covers another cell in which the terminal is located, to the terminal, based on the first channel information and/or the first communication quality information, in a case where reception signal intensity or a ratio of a reception signal to an interference signal is equal to or less than a threshold defined in advance; the first base station unit receives second channel information between the one or multiple second antennas and the terminal, which is calculated by the terminal using a second reference signal received from the second base station specified by the identification information, from the terminal; the first base station unit transmits a support request including identification information of the terminal, identification information of the first base station, the identification information of the second base station, the first and second channel information and a transmission signal to the terminal, to the communication unit; the communication unit selects an antenna combination with highest communication quality or higher communication quality than a threshold defined in advance, from the one or multiple first antennas and the one or multiple second antennas, based on the support request, creates scheduling information and antenna mapping information of a time frequency resource, maps the transmission signal to the terminal according to the scheduling information and the antenna mapping information and performs transmission to the transmission signal synthesis unit; and the transmission signal synthesis unit multiplexes and maps the transmission signal from the communication unit to the terminal and other transmission signals from the first base station unit and the second base station unit, and performs transmission from each antenna included in the selected antenna combination.

According to another aspect of the present invention, there is provided a wireless communication system including base stations and a terminal, in which each of the base stations are classified into a fixed-cell support base station and an unfixed-area support base station.

According to another aspect of the present invention, an unfixed-area base station is a wireless base-station device in which a covered area is not limited as a cell and is registered as a cell on a network management side of a higher layer and which has a wireless baseband processing function.

According to another aspect of the present invention, the unfixed-area support base station is a wireless communication device which takes a partial role of the plurality of fixed-cell support base-station devices, uses control information of the plurality of fixed-cell support base stations, selects an arbitrary antenna group (single antenna or multiple antennas) from antennas or antenna group linked to the plurality of fixed-cell support base stations, and transmits it together with a transmission signal of each fixed-cell support base station.

According to another aspect of the present invention, the unfixed-area support base station is a wireless base-station device including an interface which performs signal exchange with a fixed-cell support base station, a physical layer signal processing controller and a physical layer signal processing unit which perform processing based on data analyzed by the fixed-cell support base station, in which: the physical layer signal processing controller determines whether the unfixed-cell support base-station device needs to perform physical layer signal processing, and generates control information used for physical layer signal processing; and the physical layer signal processing unit creates a transmission signal over radio RF resources (antenna group) of multiple fixed cells.

Moreover, it is possible to provide a wireless communication system in which a fixed-cell support base station and an unfixed-cell support base station exist in a radio service area at the same time. Moreover, the wireless communication system can be characterized in sharing a radio RF resource and performing wireless baseband processing in the fixed-cell support base station or the unfixed-cell support base station according to the state of reception quality.

According to another aspect of the present invention, the unfixed-area support base station is a wireless communication device including: a fixed-cell state monitoring unit which monitors quality information of a fixed cell and determines whether there is a necessity for unfixed-area formation; a control information for unfixed-area signal formation acquisition unit which selects antenna is included in an unfixed area and in which fixed cell the antenna is included, based on control information of a fixed cell, and acquires control information such as channel information; and an unfixed-area signal creation unit which creates a transmission signal and performs interference measure to reduce an influence from the transmission signal to the fixed cell.

Moreover, the unfixed-area support base station may decide whether to select all antennas connected to a fixed cell base station or select part of them. The unfixed-area support base station may decide whether to use all communication resources of a fixed-cell base station or use part of them.

According to another aspect of the present invention, the unfixed-area support base station is a wireless base station including: means for taking a partial role of the plurality of fixed-cell support base-station devices; means for using control information of a fixed-cell support base station; means for selecting an arbitrary antenna group (single antenna or multiple antennas) from antennas or antenna group linked to the fixed-cell support base station; and means for performing transmission together with a transmission signal of the fixed-cell support base station.

According to another aspect of the present invention, the unfixed-area support base station is a wireless base-station device including: an interface device which performs signal exchange with a fixed-cell support base station; a physical layer signal processing controller and a physical layer signal processing device which perform processing based on data analyzed by the fixed-cell support base station; a device which determines whether an unfixed-cell support base-station device needs to perform physical layer signal processing; a device which generates control information used for physical layer signal processing; and a device which creates a transmission signal over radio RF resources (antenna group) of multiple fixed cells.

### Advantageous Effects of Invention

According to the present invention, it is possible to maintain the stability of network management without increasing the number of cells, establish both the cell-splitting effect and flexible interference measures, and efficiently realize the expansion of a high-communication-speed/high-communication-quality area.

Moreover, according to the present invention, a support area is not limited by the processing performance of a device and it is possible to freely adapt it according to the demand.

### Brief Description of Drawings

[FIG. 1] FIG. 1 is a view illustrating a configuration of a cellular system.
[FIG. 2] FIG. 2 is a view to describe an effect of cell-splitting in a cellular system.
[FIG. 3] FIG. 3 is a view to describe an effect of coordinated multi-point operation in a cellular system.
[FIG. 4] FIG. 4 is a system configuration diagram related to the first embodiment of the present invention.
[FIG. 5] FIG. 5 is a view to describe a device configuration of a fixed-cell support base station according to the first embodiment of the present invention.
[FIG. 6] FIG. 6 is a view to describe a device configuration of an unfixed-area support base station according to the first embodiment of the present invention.
[FIG. 7] FIG. 7 is a view illustrating signals input from a fixed-cell support base station into an unfixed-area support base station.
[FIG. 8] FIG. 8 is a view illustrating signals input from an unfixed-area support base station into a fixed-cell support base station.
[FIG. 9] FIG. 9 is a view illustrating a signal sequence according to the first embodiment of the present invention.
[FIG. 10] FIG. 10 is a processing flowchart diagram of an unf ixed-area support base station according to the first embodiment of the present invention.
[FIG. 11] FIG. 11 is a view to describe a system configuration according to the second embodiment of the present invention.
[FIG. 12] FIG. 12 is a view to describe a device configuration according to the second embodiment of the present invention.
[FIG. 13] FIG. 13 is an explanatory diagram of data stored in a memory 305.
[FIG. 14] FIG. 14 is an explanatory diagram of data stored in a memory 404.

### Description of Embodiments

In the following, a wireless communication system, wireless communication device, and wireless communication method according to an embodiment of the present invention are described in detail with reference to the drawings.

### A. First Embodiment

### 1. System

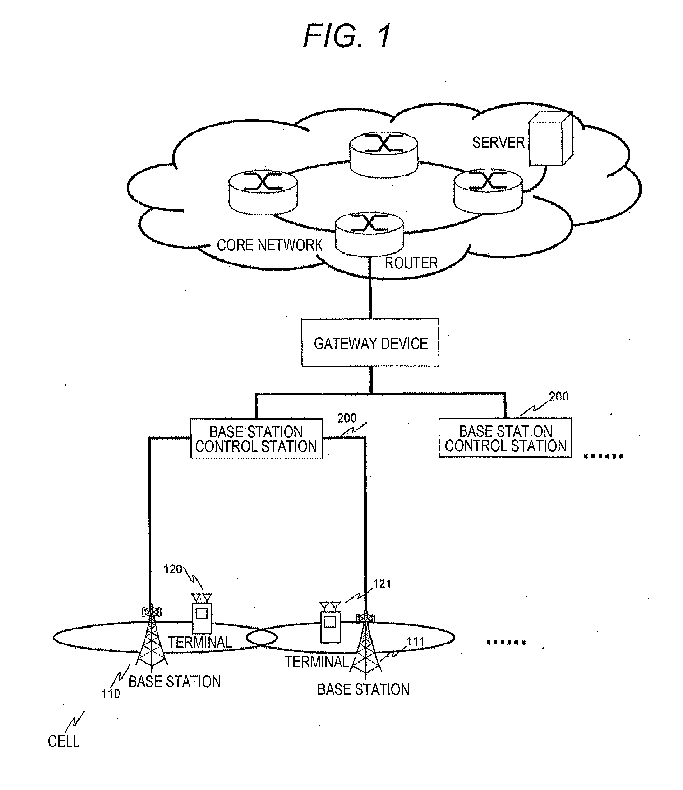

The first embodiment of the present invention is described with reference to FIGS. 1 to 6.

FIG. 1 is a view illustrating a configuration of a cellular system, mobile communication system, or portable phone system assumed in the present embodiment. A core network connected with a server that provides service content or the like is connected with a radio access network by a gateway. The radio access network includes a base station control station 200 and a base station 110. The radio access network divides an area to provide services into a plurality of cells and installs one base station every cell, and each base station realizes the service provision to a terminal in its own cell by performing signal processing on data such as service content, converting it into radio signals and transmitting and receiving the signals by radio waves. The gateway is connected with a plurality of base station control stations, and each base station control station is connected with a plurality of base stations.

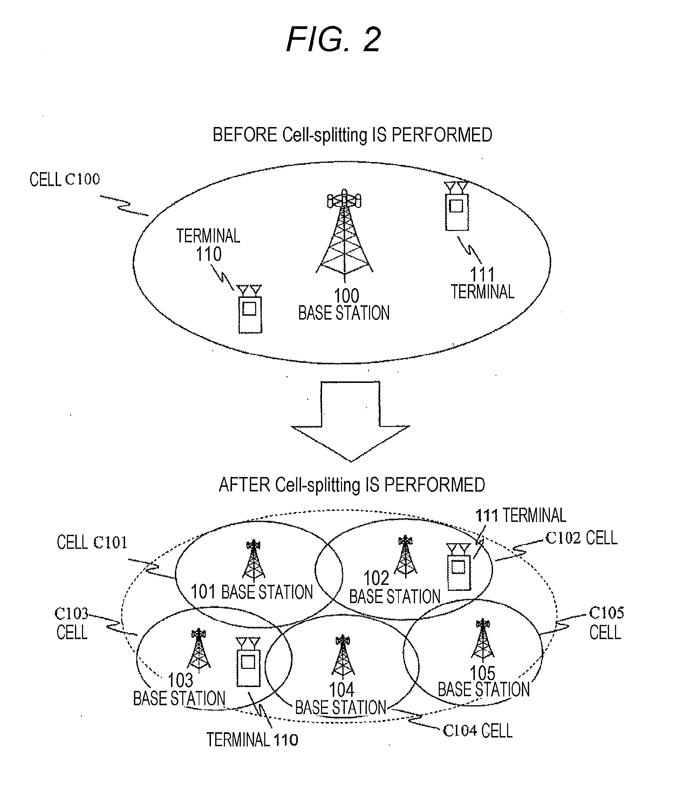

FIG. 2 is a view to describe an effect of cell-splitting in the cellular system. Before the cell-splitting is performed, one base station 100 covers the area of a cell C100 and provides wireless communication services to terminals (for example, a terminal 110 and a terminal 111) in this area. After the cell-splitting is performed, the area of the original cell C100 is divided into a plurality of small cells (for example, cells C101 to C105) by a plurality of base stations 101 to 105. The base stations are added to cover each cell and provide wireless communication services to the terminal in each cell. By this means, the terminals 110 and 111 that belonged to one cell C100 before the cell-splitting is performed result in belonging to different cells, and it becomes possible to independently assign communication resources available for the terminals 110 and 111. That is, an effect of increasing radio resources in the area by the multiple of the number of cells (five times in this example) is acquired by the cell-splitting.

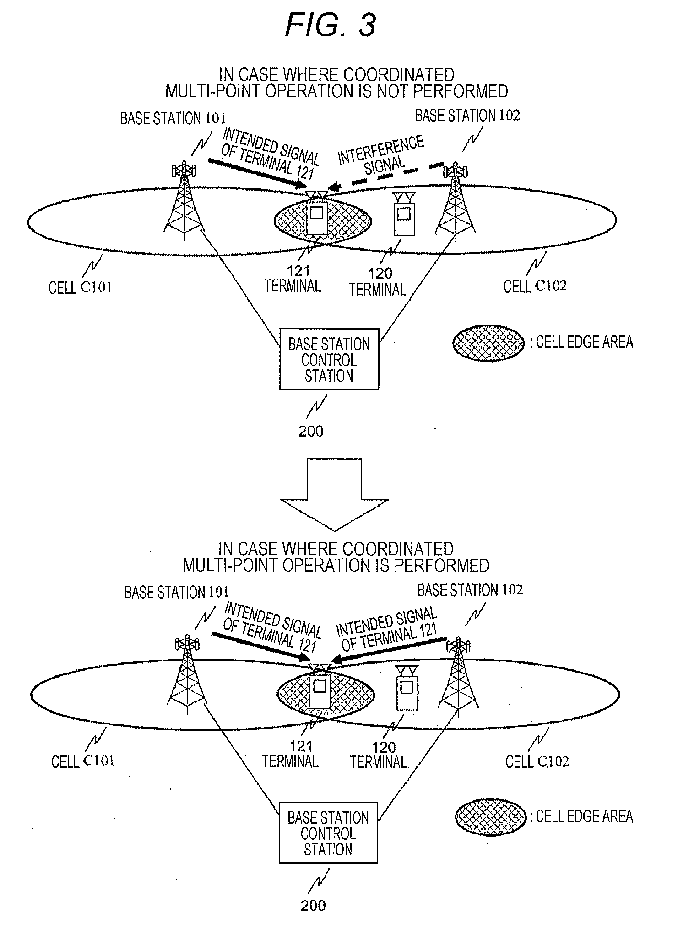

FIG. 3 is a view to describe an effect of coordinated multi-point operation in the cellular system. In a case where the coordinated multi-point operation is not performed, since an intended signal transmitted from a cell C101 to which a terminal 121 belongs and an interference signal from a cell C102 that is an adjacent cell are delivered to the terminal 121 in a cell edge area at substantially the same level, a case is assumed where the power ratio of the received signal to the interference is low and the throughput decreases. In a case where the coordinated multi-point operation is performed, the intended signal is transmitted from the cell C101 that is the subject cell to the terminal 121 in the cell edge area while the cell C102 that is the adjacent cell transmits the intended signal of the terminal 121. By this means, the terminal 121 receives the intended signals from both the subject cell and the adjacent cell, and the interference signal from the adjacent cell disappeared. Meanwhile, although communication resources of the adjacent cell C102 are originally managed for the terminal belonging to the cell C102, a problem occurs that they are used for the terminal 102 different from the subject cell terminal because of the coordinated multi-point operation.

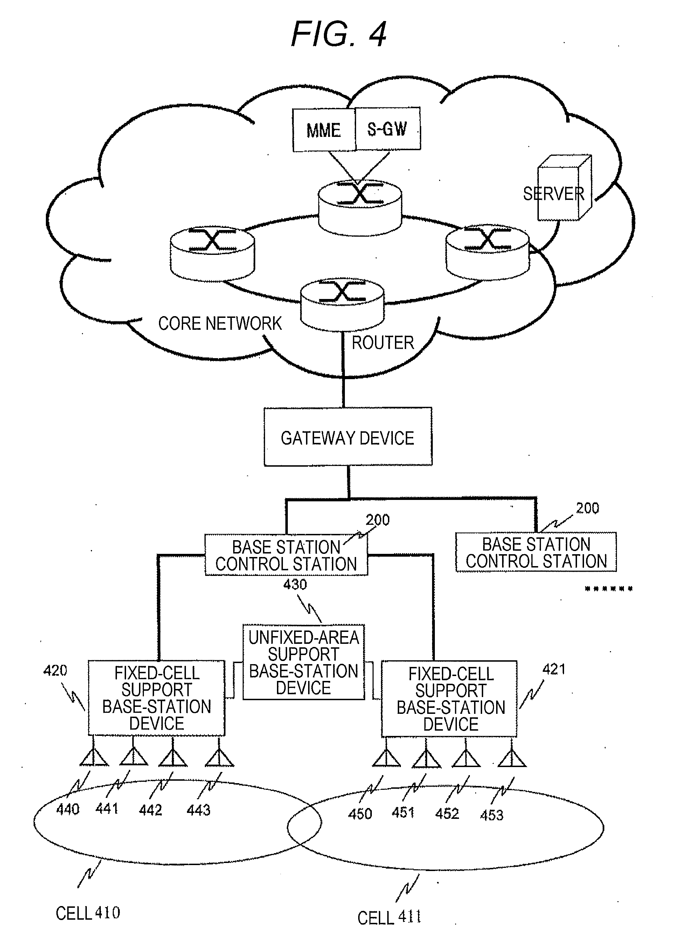

FIG. 4 is a system configuration diagram of a radio access network according to the first embodiment of the present invention. In the present system, an unfixed-cell support base station 430 is arranged besides fixed-cell support base stations 420 and 421 that cover respective cells. The unfixed-cell support base station 430 includes an interface with the plurality of fixed-cell support base stations 420 and 421, and has an exchange function of baseband signals.

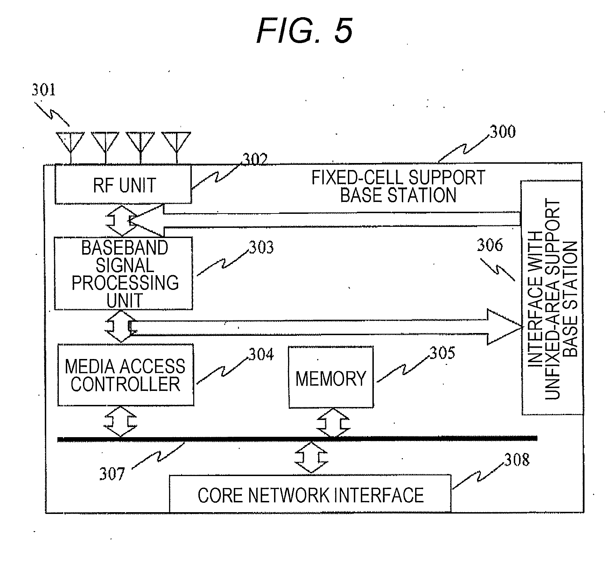

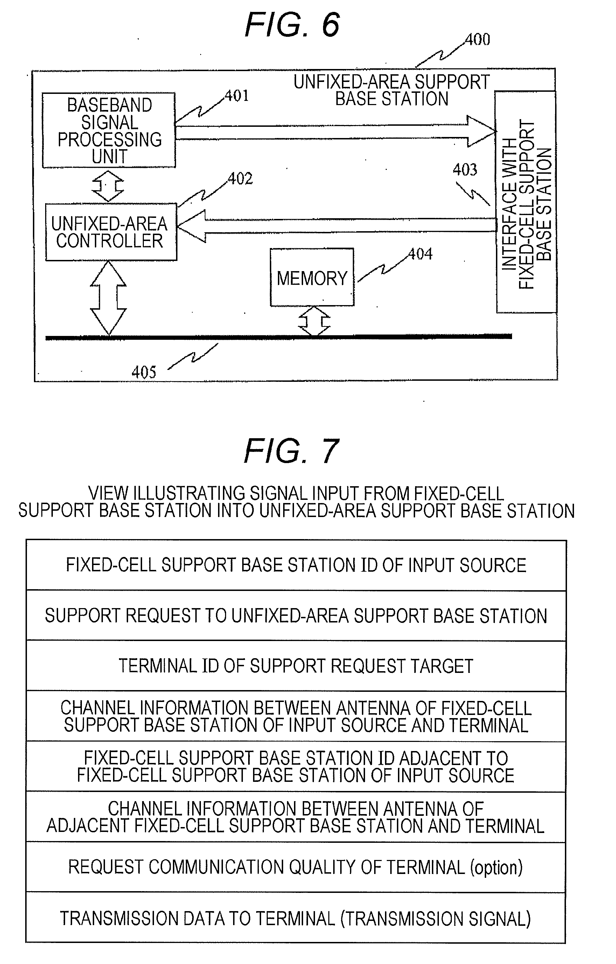

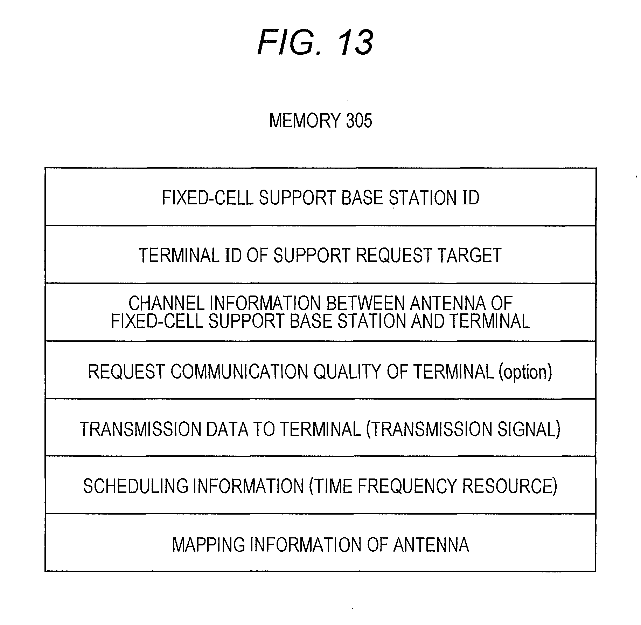

FIG. 5 illustrates a device configuration diagram of the fixed-cell support base station. FIG. 6 illustrates a device configuration diagram of the unfixed-area support base station. It is needless to say that these devices can be realized by hardware such as a CPU, a DSP, a FPGA and a memory. A fixed-cell support base station 300 illustrated in FIG. 5 includes an antenna 301, an RF (Radio Frequency) unit 302, a baseband signal processing unit 303, a media access controller 304, the memory 305, an interface 306 with the unfixed-area support base station, an internal bus 307 and a core network interface 308. The internal bus 307 is connected to the MAC (Media Access Controller) 304 and the memory 305. The base station 300 is connected with a higher-layer control station of the system via the core network interface 308 and acquires wireless communication service data and communication control information illustrated in FIG. 13. The above-mentioned wireless communication service data and the communication control information are stored in the memory 305. The media access controller 304 reads out the communication control information from the memory 305, inputs the wireless communication service data in the baseband signal processing unit 303 according to the content of the communication control information and performs signal processing in the baseband signal processing unit 303. A transmission signal generated by the signal processing is transmitted by the RF unit 302 using the antenna 301. The transmission signal includes a synchronization signal, system information, a reference signal, reception control information, and a transmission signal. Meanwhile, the antenna 301 receives a radio signal from a terminal, and the radio signal is converted into a baseband signal by the RF unit 302. The baseband signal is input in the baseband signal processing unit 303 and subj ected to reception processing in the baseband signal processing unit 303 according to an instruction of the media access controller 304. The processed data is stored in the memory 305 once, and, from this, feedback information on a random access preamble, terminal identifier, channel information, and communication quality information is read out. Based on the above-mentioned information, the base station 300 decides whether to support transmission to a terminal designated by the terminal identifier or cause an unfixed-area support base station to support it. In the case of making a decision to cause the unfixed-area support base station to support it, the base station 300 includes adjacent cell information in a transmission signal and transmits it to the terminal. Adjacent channel information, subject-cell channel information, terminal identifier and transmission data to the terminal designated by the terminal identifier, which are fed back by the terminal, are transmitted to the unfixed-area support base station by the interface 306 with the unfixed-area support base station. Uplink data of the terminal is output to the core network. The media access controller 304 has a function to perform access control and perform an output to the baseband processing unit 303. The baseband processing unit 303 has a function to perform signal processing and output a transmission baseband signal to the RF unit 302, and has a function to perform processing on the reception baseband signal input from the RF unit 302 and output it to the media access controller 304. The RF unit 302 has a function to up-convert the transmission baseband signal input from the baseband signal processing unit 303 up to a carrier frequency and output it to the antenna 301, and has a function to down-convert a high frequency signal received in the antenna 301 and output it to the baseband signal processing unit 303 as the reception baseband signal. The antenna 301 has a function to transmit the input high frequency signal input from the RF unit 302 to the space, and has a function to receive a signal propagated through the space and output it to the RF unit 302. Further, it is possible to input an instruction of the media access controller 304 in the unfixed-area support base station through the interface 306 with the unfixed-area support base station.

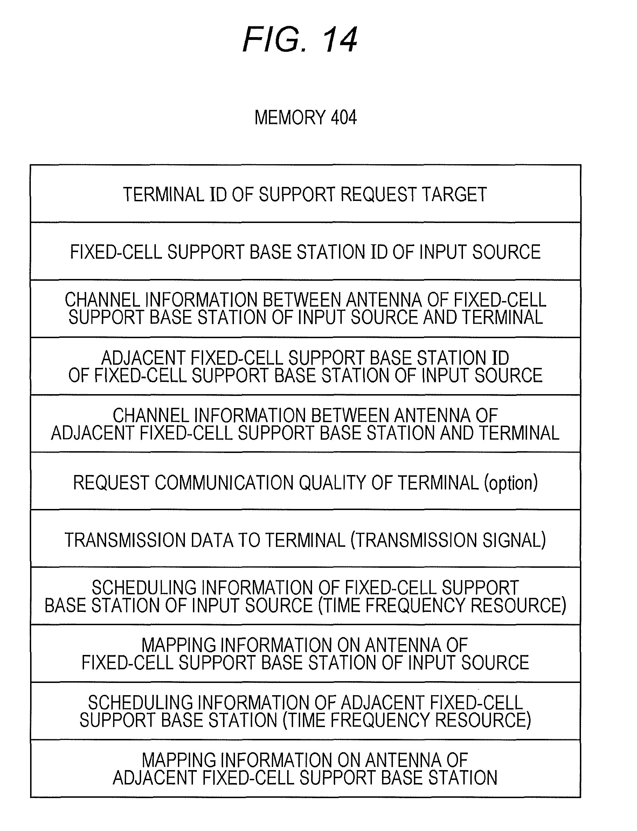

An unfixed-area support base station 400 illustrated in FIG. 6 includes a baseband signal processing unit 401, an unfixed-area controller 402, an interface 403 with the fixed-cell support base station, a memory 404, and an internal bus 405. According to a support request from the fixed-cell support base station through the interface 403 with the fixed-cell support base station, the unfixed-area support base station 400 acquires a terminal identifier, channel information between a terminal designated by the terminal identifier and the fixed-cell support base station, and transmission data to the terminal designated by the terminal identifier. Signals that are illustrated in FIG. 14 and that are input from the fixed-cell support base station into the unfixed-area support base station are stored in the memory 404. The unfixed-area controller 402 reads out the signal from the memory 404, decides a scheme of baseband processing based on this signal and instructs it to the baseband signal processing unit 401. The baseband signal processing unit 401 reads out the transmission data to the terminal from the memory 404 and performs signal processing according to the instruction of the unfixed-area controller 402. A transmission signal generated by the processing in the baseband signal processing unit 401 is transmitted to a related fixed-cell support base station through the interface 403, together with a terminal identifier, scheduling information, and antenna mapping information.

### 2. Signal content and memory

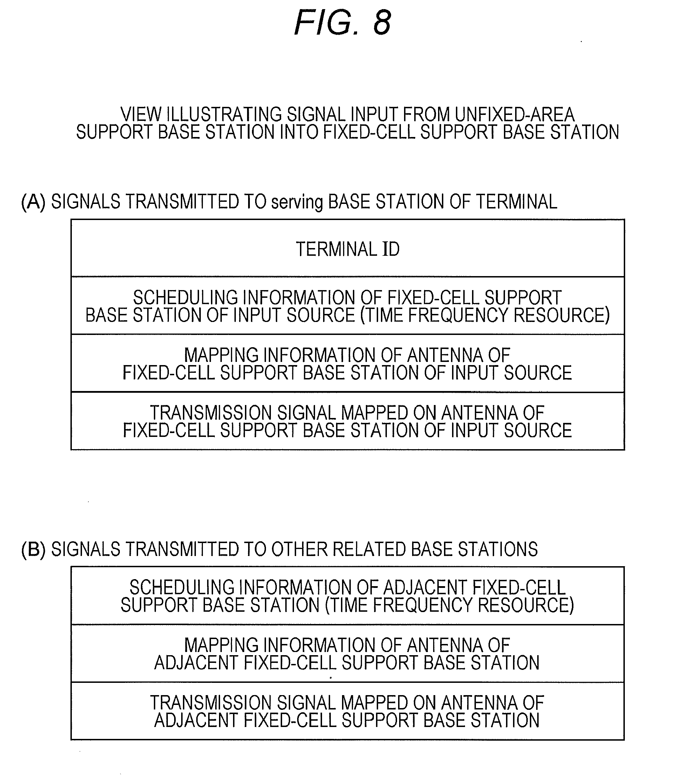

FIG. 7 and FIG. 8 illustrate content of signals exchanged between a fixed-cell support base station and an unfixed-area support base station.

FIG. 7 illustrates signal content of a support request transmitted from the fixed-cell support base station to the unfixed-area support base station. This signal includes the fixed-cell support base station ID of an input source, data showing a support request to an unfixed-area support base station of input destination, the terminal identifier of a target terminal of the support request, channel information between the terminal and an antenna of the fixed-cell support base station of the input source, channel information between an antenna of a fixed-cell support base station adjacent to the fixed-cell support base station of the input source and the terminal, an index indicating request communication quality in the case of type communication that assures the communication quality of the terminal (option: it may be omitted in the case of best-effort communication) and transmission data (transmission signal) to the terminal. Here, both channel information and communication quality information may be included instead of the channel information. Moreover, the channel information and/or the communication quality information can include any of, for example, a CQI (channel quality indicator), wideband CQI (wideband communication quality indicator), DCQI (difference communication quality indicator) and PSCI (excellent communication indicator).

FIG. 8 illustrates the signal content of an instruction transmitted from the unfixed-area support base station to the fixed-cell support base station. As illustrated in FIG. 8(A), the unfixed-area support base station transmits the terminal identifier of a supported terminal, scheduling information (designated time frequency resource) of the terminal, mapping information of an antenna of the fixed-cell support base station, and a transmission signal mapped by the mapping information, to the fixed-cell support base station that made the support request. Further, as illustrated in FIG. 8(B), the unfixed-area support base station transmits scheduling information (designated time frequency resource) of the terminal, mapping information of an antenna and a transmission signal mapped by the mapping information, to other fixed-cell support base stations related to terminal transmission, according to the decision by the unfixed-area support base station. FIG. 13 illustrates an explanatory diagram of data stored in the memory 305, and FIG. 14 illustrates an explanatory diagram of data stored in the memory 404. Each item is as described in FIG. 7, FIG. 8(A) and FIG. 8(B).

### 3. Processing operation

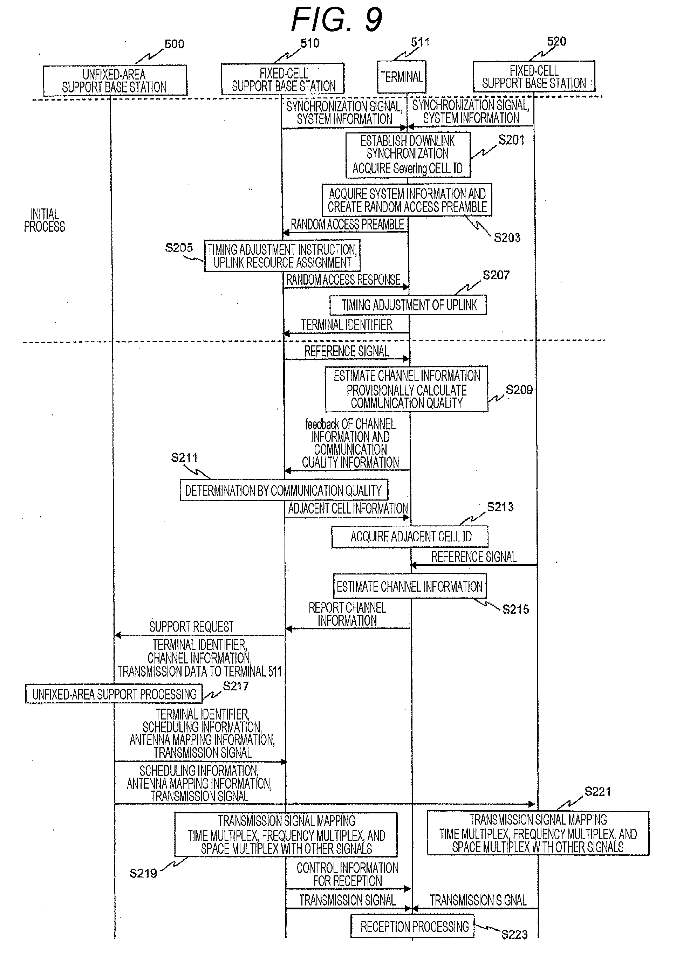

FIG. 9 is a view illustrating a signal sequence according to the first embodiment of the present invention.

The fixed-cell support base stations 510 and 520 provide wireless communication services to terminals in cells managed by them through their antennas. The base stations 510 and 520 periodically broadcast synchronization signals and system information. Downlink (from the base stations to the terminal) synchronization is established using the received synchronization signals after a terminal 511 is powered on, and, moreover, the terminal 511 decides a serving base station from the received signals of the different base stations according to a standard such as the reception intensity, and acquires a cell ID (S201). The present embodiment premises that the serving base station of the terminal 511 is the base station 510, as one example without loss of generality. Further, the terminal 511 creates a random access preamble based on the system information broadcast by the base station 510 (S203) and transmits it to the base station 510. The base station 510 creates an instruction for transmission timing adjustment of the terminal on the basis of the random access preamble of the terminal 511, performs uplink (from the terminal to the base station) resource assignment (S205) and transmits a random access response to the terminal 511. The terminal 511 adjusts the transmit timing according to the random access response and notifies a terminal identifier to the base station 511 by the use of an uplink resource. By this means, the initial connection with access to the cellular system in the terminal 511 is enabled, and it is possible to receive services from the base station.

For transmission and reception of radio service data, the base station 510 transmits a reference signal generated based on the cell ID. The terminal 511 compares the received reference signal and the previously received reference signal, performs channel information estimation between each antenna of the base station 510 and the terminal 511, and provisionally calculates (or calculates) the communication quality (S209). The terminal 511 feeds back channel information and the communication quality information to the base station 510. The base station 510 decides whether to support transmission to the terminal 511 by oneself, based on the fed-back channel information and communication quality information (S211). For example, the base station 510 can make this decision when the power ratio of the received signal to interference, the SINR, the SN ratio or the intensity of the received signal is equal to or less than a threshold defined in advance. When deciding to support it by oneself, the base station 510 continues communication with the terminal 511 by itself. On the other hand, when deciding not to support it by oneself (when deciding to perform coordinated multi-point operation), the base station 510 transmits adjacent base station information (adjacent cell information) to the terminal 511 and notifies the adjacent cell ID and/or the adjacent base station ID, and so on. The terminal 511 acquires the adjacent cell ID and/or the adjacent base station ID, and so on (S213). In the present embodiment, as one example, it is assumed that a base station that covers the adjacent cell is the base station 520. Using the reference signal transmitted by the base station 520, the terminal 511 performs channel information estimation between each antenna of the base station 520 and the terminal 511 (S215), and reports it to the base station 510. Moreover, the base station 510 transmits a support request illustrated in FIG. 7 (a) to an unfixed-area support base station 500. In this example, the support request includes the ID of the base station 510, data showing the support request, the ID of the terminal 511, channel information between the base station 510 and the terminal 511, the ID of the base station 520, channel information between the base station 520 and the terminal 511 (option: request communication quality of the terminal 511), and transmission data to the terminal 511. Here, instead of the channel information, both the channel information and the communication quality information may be included.

In response to the support request, the base station 500 performs unfixed-area support processing by the use of that information (S217; see the flowchart described below for details). In this processing, the base station 500 selects an antenna combination in which it is possible to acquire the highest communication quality or higher communication quality than a threshold defined in advance, from arbitrary antenna combinations among the antennas of the base stations 510 and 520, and performs scheduling and antenna mapping according to the selected antenna combination. According to the result of such unfixed-area support processing, the base station 500 transmits an instruction signal illustrated in FIG. 8(A) to the base station 510, and transmits an instruction signal illustrated in FIG. 8(B) to the base station 520. In this example, in the base station 510, the ID of the terminal 511, scheduling information, mapping information on each antenna of the base station 510 and the transmission signal mapped on each antenna are included. Moreover, in the base station 520, scheduling information, mapping information on each antenna of the base station 520, and the transmission signal mapped on each antenna are included. The base station 510 and the base station 520 map the transmission signals transmitted from the base station 500 according to the received scheduling information and antenna mapping information, multiplex (time-multiplex, frequency-multiplex or spatial-multiplex) transmission signals generated by the subject station (510 or 520) and create the transmission signal transmitted by each antenna (S219, S221). The base station 510 transmits reception control information related to scheduling and the communication scheme to the terminal 511. The base station 510 and the base station 511 transmit the transmission signals, and the terminal 511 performs reception processing based on the control information of the base station 510 (S223) and acquires radio service data.

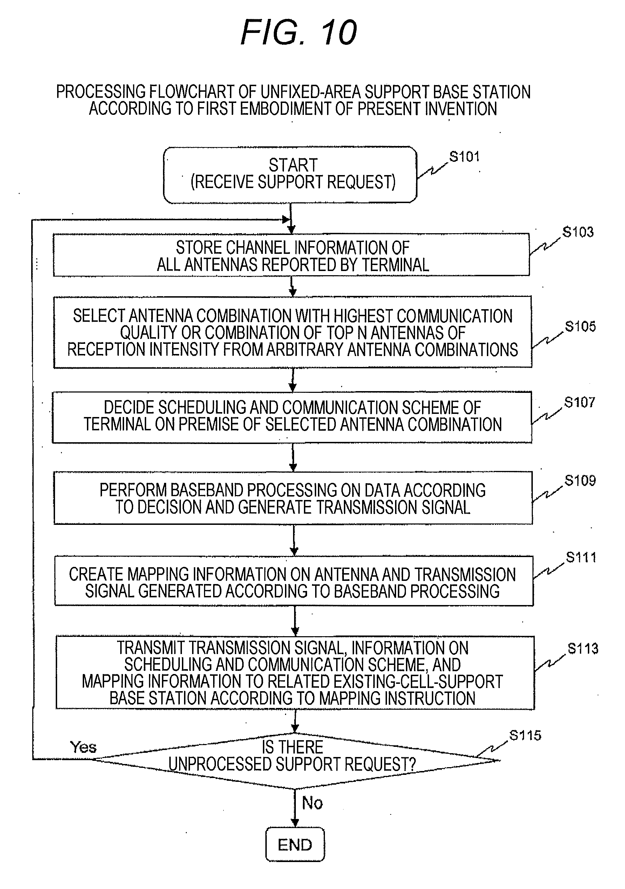

FIG. 10 illustrates a processing flowchart of the unfixed-area support base station 500. In response to a support request from the fixed-cell support base station 510 (S101), the unfixed-area support base station 500 extracts channel information (or channel information and communication quality information) on all antennas of the base stations 510 and 520 reported by the terminal 511 in the signal illustrated in FIG. 7(a) and stores it (S103). As an exemplification, in a case where four antennas No. 1, No. 2, No. 3, and No. 4 are connected with the base station 510 and four antennas No. 5, No. 6, No. 7, and No. 8 are connected with the base station 520, the base station 500 stores channel information on antennas No. 1 to No. 8. According to the channel information on antennas No. 1 to No. 8, the base station 500 selects an antenna combination in which it is possible to acquire the highest communication quality, from arbitrary antenna combinations that are not limited to allowable antenna combinations in the fixed-cell support base stations 510 and 520, among antennas No. 1 to No. 8 of both of the fixed-area support base stations 510 and 520 (S105). For example, a combination of antennas No. 1 and No. 2 of the fixed-cell support base station 510 and antennas No. 5 and No. 6 of the fixed-cell support base station 520, or a combination of antennas No. 1, No. 2 and No. 3 of the fixed-cell support base station 510 and antenna No. 5 of the fixed-cell support base station 520 is possible. It is needless to say that it is possible to use other selection criteria when the present invention is implemented. For example, a set of top N (N can be configured by the base station 500) antennas of reception intensity among all antennas is selected. Also, in a case where request communication quality is included in the support request or the request communication quality is defined in advance, an antenna combination in which it is possible to acquire higher communication quality than the request communication quality may be selected. Moreover, the base station 500 may select all antennas connected with the base stations 510 and 520 or select part of them, and use all communication resources of the base stations 510 and 520 or use part of them.

Next, on the premise of the selected antenna combination, the base station 500 decides scheduling (assignment of time frequency resources) and communication scheme of the terminal (S107). Further, according to this decision, the base station 500 performs baseband processing on transmission data to the terminal 511 and generates a transmission signal (S109). Mapping information on each antenna and the transmission signal is created together with the generated transmission signal (S111), and the scheduling and communication scheme information of the terminal 511 are transmitted to a related fixed-cell support base station together (S113). Here, it shifts to step S103 in a case where there is an unprocessed support request (S115), and the base station 500 does not operate in a case where there is no unprocessed support request (S115).

### B. Embodiment 2

The present invention is applicable to a centralized base station in which a plurality of base-station devices is arranged in one place. As the second embodiment, an example is described where a plurality of fixed-cell support base-station devices and an unfixed-area support base-station device are collectively arranged in one centralized base station. Here, the fixed-cell support base-station devices and the unfixed-area support base-station device are respectively realized by a BBU (baseband unit). The base stations are centralized in one place and the antennas of each cell are arranged in the cell in a decentralized manner by RRH (Remote Radio Head).

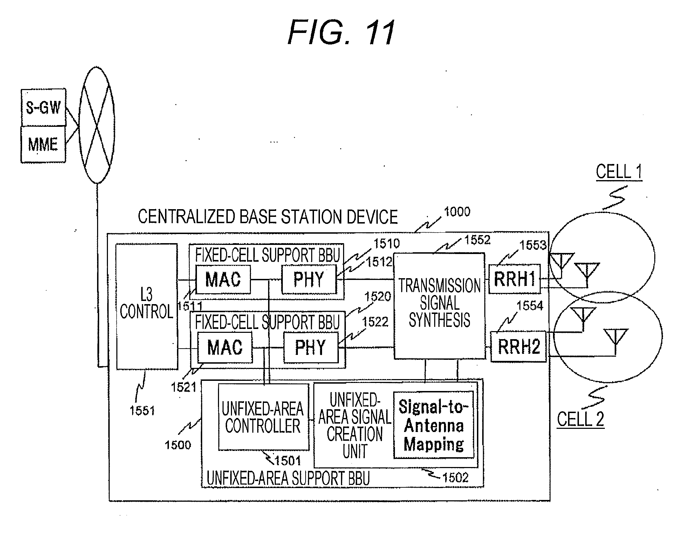

FIG. 11 is a view illustrating a system configuration according to the second embodiment of the present invention. A centralized base-station device 1000 includes a fixed-cell support BBU 1510, a fixed-cell support BBU 1520, an unfixed-area support BBU 1500, L3 control 1551, a transmission signal synthesis unit 1552, an RRH1 1553, and an RRH2 1554. The fixed-cell support BBUs 1510 and 1520 include MACK processing units (physical layer signal control units) 1511 and 1521 and downlink PHY processing units (physical layer signal processing units) 1512 and 1522, respectively. The unfixed-area support BBU 1500 includes an unfixed-area controller 1501 and an unfixed-area signal creation unit 1502. The fixed-cell support base stations illustrated in the first embodiment are realized by the fixed-cell support BBUs 1510 and 1520, and the unfixed-cell support base station is realized by the unfixed-area support BBU 1500. As illustrated in the figure, each BBU is arranged in the centralized base-station 1000, and the antennas of each cell connected by optical fibers are arranged in the cell in a decentralized manner by the RRHs 1553 and 1554.

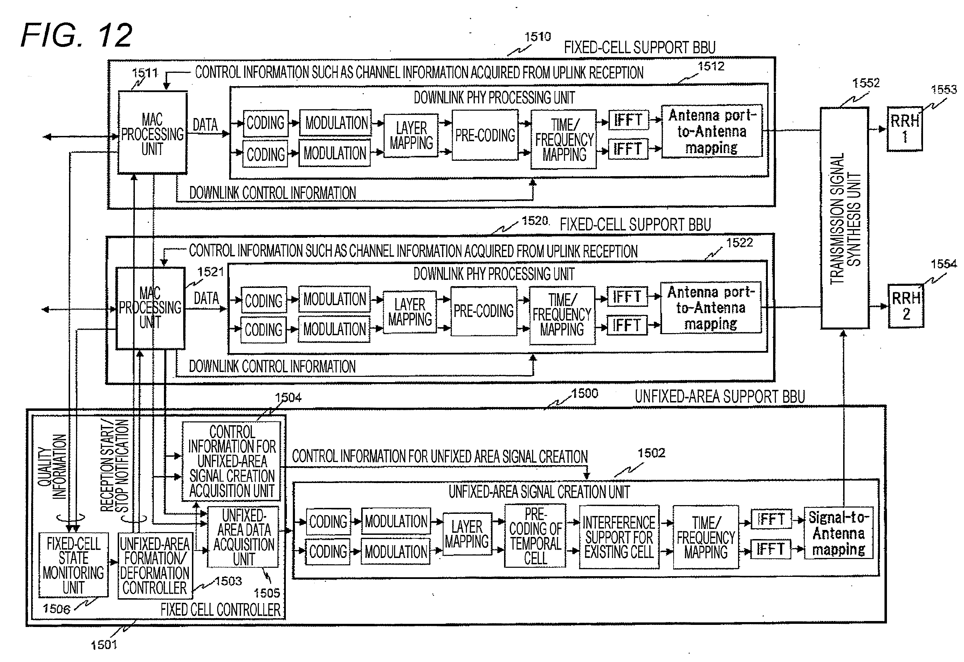

FIG. 12 is a view to describe a device configuration of a centralized base station according to the second embodiment of the present invention. The fixed-cell support BBUs 1510 and 1520 include MAC processing units 1511 and 1521 and downlink physical layer processing units 1512 and 1522, respectively, and perform baseband signal processing of the existing wireless standard (for example, LTE). In the unfixed-area support BBU 1500, a fixed-cell state monitoring unit 1506 monitors quality information of a fixed cell, determines whether there is a necessity for unfixed-area support, and notifies it to an unfixed-area formation/deformation controller 1503. According to the notice (if it is the notice that there is the necessity), the unfixed-area formation/deformation controller 1503 notifies the reception start to the fixed-cell support BBU 1510 or 1520 to which the user belongs and which supports a formed unfixed area, while the fixed-cell support BBU 1510 or 1520 to which the user belongs notifies ON to a control information for unfixed-area signal creation acquisition unit 1504 and an unfixed-area data acquisition unit 1505. By the ON notification, the control information for unfixed-area signal creation acquisition unit 1504 selects which antenna is included in the unfixed area and in which fixed cell the antenna is included, based on control information on fixed cells, acquires control information for unfixed-area signal creation such as channel information, and transmits it to an unfixed-area signal creation unit 1502. The unfixed-area data acquisition unit 1505 receives user's data supported in the unfixed area from the fixed-cell support BBU 1510 or 1520, and outputs it to the unfixed-area signal creation unit 1502. The unfixed-area signal creation unit 1502 creates a transmission signal according to a standard such as LTE, and performs interference support that reduces the influence from the transmission signal to a fixed cell. The signal created by the unfixed-area signal creation unit 1502 is synthesized with the transmission signals of the fixed-cell BBUs 1510 and 1520 in the transmission signal synthesis unit 1552, and input in the RRHs 1553 and 1554. The RRHs 1553 and 1554 convert and transmit RF signals. In a case where the fixed-cell state monitoring unit 1506 gives a deformation notice to the unfixed-area formation/deformation controller 1503, the unfixed-area signal creation unit 1506 is terminated. The terminal operation of the present embodiment is the similar operation to the first embodiment.

According to the present embodiment, it is possible to maintain the stability of network management without increasing the number of cells, establish both the cell-splitting effect and flexible interference measures, and efficiently realize the expansion of a high-communication-speed/high-communication-quality area.

### Industrial Applicability

The present invention is applicable to various wireless communication systems such as a cellular system, a mobile communication system, and a portable phone system. Moreover, as a terminal, various radio terminals besides a mobile terminal are applicable.

### Reference Signs List

- 100: Control station
- 110, 111: Base station
- 120, 121: Terminal
- 210, 220: Frequency band
- 201: Antenna of terminal device
- 202: RF (high frequency) unit of terminal device
- 203: Baseband signal processing unit of terminal device
- 204: Media access controller of terminal device
- 205: Data transmission/reception controller of terminal device
- 206: Memory of terminal device
- 207: User interface of terminal device
- 208: Internal bus of terminal device
- 209: GPS unit of terminal device
- 301: Antenna of base-station device
- 302: RF (high frequency) unit of base-station device
- 303: Baseband signal processing unit of base-station device
- 304: Media access controller of base-station device
- 305: Data transmission/reception controller of base-station device
- 306: Memory of base-station device
- 307: Controller for base station maintenance of base-station device
- 308: Control station interface of base-station device
- 309: Internal bus of terminal device
- 401: Base station interface of control station device
- 402: Mobility management unit of control station device
- 403: Gateway unit of control station device
- 404: Maintenance monitoring unit (OAM) of control station device
- 405: Maintenance monitoring data input interface of control station device
- 406: Core network interface of control station device
- 407, 408: Internal bus of control station device

## Claims

1. A base-station device comprising:
a first base station unit which is connected with a first antenna and supports a first fixed cell;
a second base station unit which is connected with a second antenna and supports a second fixed cell; and
a communication unit which performs communication with the first base station unit and the second base station unit and supports an unfixed area, wherein
the first base station unit transmits a first reference signal to a terminal and receives quality information calculated by the terminal using the first reference signal,
the communication unit selects a specific antenna from the first antenna and the second antenna in a case where the quality information satisfies a predetermined condition, and generates a transmission signal to the terminal by performing baseband processing, and
the generated transmission signal to the terminal is transmitted from the selected specific antenna to the terminal.

2. The base-station device according to claim 1, further comprising a transmission signal synthesis unit which synthesizes transmission signals from the first base station unit, the second base station unit, and the communication unit, wherein
the communication unit selects an antenna combination with highest communication quality or higher communication quality than a threshold defined in advance, from the first antenna and the second antenna, as the specific antenna, and transmits scheduling information of the terminal, mapping information of the first antenna and the second antenna, and the transmission signal to the terminal, to the transmission signal synthesis unit, and
the transmission signal synthesis unit multiplexes and maps the transmission signal from the communication unit to the terminal and other transmission signals from the first base station unit and the second base station unit, and performs transmission from the selected specific antenna.

3. The base-station device according to claim 1, wherein
the first base station unit receives first channel information and first communication quality information between the first antenna and the terminal, which are calculated by the terminal using the received first reference signal, from the terminal,
the first base station unit transmits identification information of the second base station unit that covers another cell in which the terminal is located, to the terminal, based on the first channel information and the first communication quality information, in a case where reception signal intensity or a ratio of a reception signal to an interference signal is equal to or less than a threshold defined in advance,
the first base station unit receives second channel information between the second antenna and the terminal, which is calculated by the terminal using a second reference signal received from the second base station unit specified by the identification information, from the terminal, and
the first base station unit transmits a support request including identification information of the terminal, identification information of the first base station unit, the identification information of the second base station unit, the first and second channel information and a transmission signal to the terminal, to the communication unit.

4. The base-station device according to claim 1, wherein the communication unit includes:
a fixed-cell state monitoring unit which monitors quality information of the first base station unit and the second base station unit and determines whether there is a necessity for unfixed-area formation by the communication unit;
a control information for unfixed-area signal creation acquisition unit which selects a plurality of antennas included in the unfixed-area formation among the first antenna and the second antenna, based on control information of the first base station unit and the second base station unit, and finds control information including channel information;
an unfixed-area data acquisition unit which receives transmission data to the terminal supported by the unfixed area from the first base station unit; and
an unfixed-area signal creation unit which receives an output from the unfixed-area data acquisition unit and creates the transmission signal to the terminal.

5. The base-station device according to claim 4, further comprising a transmission unit which converts a signal from the transmission signal synthesis unit into a radio signal and transmits the radio signal,
wherein the transmission signal synthesis unit synthesizes the transmission signal to the terminal, which is created by the unfixed-area signal creation unit, and other transmission signals from the first base station unit and the second base station unit, and performs an output to the transmission unit.

6. A base-station device comprising:
a first base station unit which supports a first fixed cell;
a second base station unit which supports a second fixed cell; and
a communication unit which performs communication with the first base station unit and the second base station unit and to which a cell ID is not assigned from a network management side of a higher layer,
wherein the communication unit generates a transmission signal to a terminal by taking a partial role of the first base station unit and the second base station unit and performing signal processing of a physical layer in a case where the first base station unit and the second base station unit perform communication with the terminal in cooperation.

7. The base-station device according to claim 6, further comprising a transmission signal synthesis unit which synthesizes transmission signals from the first base station unit, the second base station unit, and the communication unit, wherein
the first base station unit is connected with a first antenna,
the second base station unit is connected with a second antenna,
the communication unit selects an antenna combination with highest communication quality or higher communication quality than a threshold defined in advance, from the first antenna and the second antenna, and transmits scheduling information of the terminal, mapping information of the first antenna and the second antenna, and the transmission signal to the terminal, to the transmission signal synthesis unit, and
the transmission signal synthesis unit multiplexes and maps the transmission signal from the communication unit to the terminal and other transmission signals from the first base station unit and the second base station unit, and performs transmission from each antenna included in the selected antenna combination.

8. The base-station device according to claim 6, wherein
the first base station unit receives first channel information and first communication quality information between the first antenna and the terminal, which are calculated by the terminal using a received first reference signal, from the terminal,
the first base station unit transmits identification information of the second base station unit that covers another cell in which the terminal is located, to the terminal, based on the first channel information and the first communication quality information, in a case where reception signal intensity or a ratio of a reception signal to an interference signal is equal to or less than a threshold defined in advance,
the first base station unit receives second channel information between the second antenna and the terminal, which is calculated by the terminal using a second reference signal received from the second base station unit specified by the identification information, from the terminal, and
the first base station unit transmits a support request including identification information of the terminal, identification information of the first base station unit, the identification information of the second base station unit, the first and second channel information and the transmission signal to the terminal, to the communication unit.

9. The base-station device according to claim 6, wherein the communication unit includes:
a fixed-cell state monitoring unit which monitors quality information of the first base station unit and the second base station unit and determines whether there is a necessity for unfixed-area formation by the communication unit;
a control information for unfixed-area signal creation acquisition unit which selects a plurality of antennas included in the unfixed-area formation among the first antenna and the second antenna, based on control information of the first base station unit and the second base station unit, and finds control information including channel information;
an unfixed-area data acquisition unit which receives transmission data to the terminal supported by the unfixed area from the first base station unit; and
an unfixed-area signal creation unit which receives an output from the unfixed-area data acquisition unit and creates the transmission signal to the terminal.

10. A communication method in a wireless communication system, the wireless communication system comprising:
a first base station which is connected with a first antenna and supports a first fixed cell;
a second base station which is connected with a second antenna and supports a second fixed cell; and
a communication device which performs communication with the first base station and the second base station and supports an unfixed area, wherein
the first base station transmits a first reference signal to a terminal and receives quality information calculated by the terminal using the first reference signal,
the communication device selects a specific antenna from the first antenna and the second antenna in a case where the quality information satisfies a predetermined condition, and generates a transmission signal to the terminal by performing baseband processing, and
the first base station and the second base station each transmit the generated transmission signal to the terminal, from the selected specific antenna to the terminal.

11. The communication method according to claim 10, wherein
the communication device selects an antenna combination with highest communication quality or higher communication quality than a threshold defined in advance, from the first antenna and the second antenna, as the specific antenna, and transmits scheduling information of the terminal, mapping information of the first antenna and the second antenna, and the transmission signal to the terminal, to the first base station and the second base station, and
the first base station and the second base station each multiplex and map the transmission signal to the terminal and other transmission signals according to the scheduling information and antenna mapping information, and performs transmission from the selected specific antenna.

12. The communication method according to claim 10, wherein
the first base station receives first channel information and first communication quality information between the first antenna and the terminal, which are calculated by the terminal using the received first reference signal, from the terminal,
the first base station transmits identification information of the second base station that covers another cell in which the terminal is located, to the terminal, based on the first channel information and the first communication quality information, in a case where reception signal intensity or a ratio of a reception signal to an interference signal is equal to or less than a threshold defined in advance,
the first base station receives second channel information between the second antenna and the terminal, which is calculated by the terminal using a second reference signal received from the second base station specified by the identification information, from the terminal, and
the first base station transmits a support request including identification information of the terminal, identification information of the first base station, the identification information of the second base station, the first and second channel information, and the transmission signal to the terminal, to the communication device.
